# FASCICULE DE BREVET EUROPEEN

(11) **EP 2 380 424 B1**
(45) Date de publication et mention de la délivrance du brevet: **29.07.2015**
(21) Numéro de dépôt: 11358001.3
(22) Date de dépôt: 18.04.2011
(51) Int. Cl.: A01D 34/416

(54) **Tête de coupe rotative utilisant des éléments de coupe flexibles filiformes, et appareils de coupe munis d'une telle tête de coupe.**
Rotierender Schneidekopf, der flexible, fadenförmige Schneideelemente verwendet, und mit einem solchen Schneidekopf ausgestattete Schneidegeräte
Rotary cutting head using flexible filiform cutting elements and cutting devices provided with such a cutting head.

(30) Priorité: 21.04.2010 FR 1001691
(43) Date de publication de la demande: 26.10.2011
(73) Titulaire: Pellenc SA, 84120 Pertuis (FR)
(72) Inventeur: Pellenc, Roger, 84120 Pertuis (FR)
(74) Mandataire: Marek, Pierre

(56) Documents cités:
- EP-A1- 1 586 231
- US-B1- 6 519 857

## Description

La présente invention concerne une tête de coupe rotative utilisant des éléments de coupe souples filiformes. Elle est avantageusement destinée à l'équipement d'appareils de coupe portables tels que coupe-herbe, coupe-bordure, débroussailleuse ou faux à moteur, taille-haie et analogues. Une telle tête de coupe est divulguée dans le document EP 1 586 231 A1.

Plus précisément, l'invention concerne une tête de coupe rotative utilisant des brins de coupe flexibles constitués par des segments de fils, de tiges ou baguettes, réalisés en toute matière convenable telle que « Nylon » ® ou autre matière plastique flexible appropriée.

L'invention concerne également les appareils de coupe portables munis de la tête de coupe exposée dans la description qui suit.

Des outils motorisés équipés de telles têtes de coupe sont couramment utilisés aussi bien par les professionnels que par les particuliers. A titre d'exemples, on signale, les documents US-2001/0023542, US-6401344, US-6944956, WO-2004/064489, WO-2005/032237, WO-2006/017372, WO-2008/139246, FR-2888085, qui décrivent différents agencements possibles de têtes de coupe utilisant des éléments de coupe constitués par des brins de fils de coupe flexibles.

Ces têtes de coupe sont montées à l'extrémité distale d'un manche équipé d'une poignée en U ou poignée double de guidage et de commande du moteur d'entraînement en rotation desdites têtes de coupe, ainsi que d'un anneau pour la fixation d'un harnais de portage.

Une tête de coupe de ce genre supporte un ou plusieurs (le plus souvent deux) éléments de coupe filiformes s'étendant radialement en direction de l'extérieur, chaque élément de coupe présentant une longueur limitée prédéterminée. Le corps de la tête de coupe comporte, latéralement, au moins un orifice d'entrée pour l'engagement d'un brin de coupe, et, dans certaines réalisations, au moins une ouverture opposée pour le retrait du ou des brins de coupe usé(s) ou endommagé(s).

Un mécanisme de serrage est logé dans le corps de la tête de coupe, ce mécanisme permettant, d'une part, l'enfoncement de l'une des portions extrêmes des brins de coupe dans la tête de coupe rotative et, d'autre part, s'opposant au mouvement inverse desdits brins qui se trouvent ainsi verrouillés en position active de montage. Ce mécanisme comprend, le plus souvent, une came dentée basculante soumise à l'action d'un moyen de pression.

Selon le document WO-2006/017372, chaque brin de coupe présente une longueur prédéterminée et peut être pincé, de manière détachable, dans une chambre substantiellement close, au moyen d'un mécanisme de pincement incluant un élément de serrage mobile et un ressort qui tend à presser ledit élément de serrage contre l'extrémité proximale du brin de coupe engagée dans ladite chambre. Un élément de libération (outil spécial ou tourne vis) est nécessaire pour coopérer avec l'élément de serrage afin d'éloigner ce dernier du brin de coupe, à l'encontre de l'action antagoniste exercée par le ressort, afin de permettre de retirer ledit brin de coupe de la tête de coupe.

Dans ce cas, pour effectuer le remplacement d'un brin ou des deux brins de coupe usé(s) ou endommagé(s), il faut disposer d'un outillage approprié pour procéder successivement à la neutralisation des ressorts assurant le maintien en position desdits brins. Outre que cela constitue une intervention contraignante, réclamant une certaine connaissance et pratique de l'outil, cet agencement ne permet pas de modifier la longueur active des brins de coupe, en cours d'utilisation de l'appareil, sans passer par l'inconvénient souligné ci-dessus. En outre, les brins de coupe ne peuvent traverser la tête de coupe, car l'axe ou arbre moteur assurant la rotation de ladite tête de coupe passe par le milieu de celle-ci. Les opérateurs sont donc conduits à utiliser des brins de coupe relativement courts, ce qui augmente la fréquence de leur remplacement par suite d'usure.

Le document US-2001/0023542 décrit une tête de coupe munie de quatre ouvertures latérales pour permettre l'engagement et le retrait de quatre brins de fil de coupe. La partie proximale de chacun de ces brins est engagée dans une chambre fermée et maintenue en position d'implantation active par un dispositif de serrage propre à chaque brin. L'organe de commande de chaque dispositif de serrage est constitué par une barrette coulissante et accessible à partir de la face supérieure du boîtier de la tête de coupe. Chaque dispositif de serrage est constitué de deux cames horizontales soumises à l'action de ressorts entre lesquelles peut être engagé et serré un brin de coupe. Les cames de serrage sont ponctuellement ouvertes par activation des barrettes de commande coulissantes disposées sur la partie supérieure de la tête de coupe dans le but de dégager le brin usé et ou de permettre la réception d'un nouveau brin. Lors du relâchement des barrettes coulissantes, les cames de serrage se rapprochent l'une de l'autre pour exercer une action de pinçage sur le brin sous l'action du ressort.

L'utilisation de la tête de coupe décrite dans ce document entraine les mêmes inconvénients que ceux qui ont précédemment été soulignés au sujet du document WO-2006/017372, avec, en plus, l'inconvénient d'un agencement et d'une utilisation plus complexe.

La longueur des brins de fils de coupe est réduite, donc nécessite des changements plus fréquents des brins usés. Deux cames sont nécessaires pour bloquer chaque fil de coupe, ce qui augmente le nombre des composants et complique la fabrication des appareils.

Pour retirer le fil usagé, il faut :
- soit extraire le fil par en-dessous et par le centre de la tête, par simple traction, après avoir retiré le bol glisseur :
- mais il faut avoir au préalable laissé dépasser un bout de fil sans quoi cela est impossible;
- la zone de préhension du bout de fil pour permettre l'extraction du fil est une zone sujette à l'encrassement ;
- soit actionner la barrette de commande pour déverrouiller les cames :
- le déverrouillage se fait fil par fil et il faut actionner chaque barrette de commande indépendamment, ce qui génère une perte de temps;
- les barrettes de commande sont de petites dimensions donc difficilement manipulables avec des gants;
- le mouvement des barrettes de commande par rapport à la cloche extérieure de la tête de coupe nécessite des jeux et donc des risques d'encrassement et de coincement.

Le document US-6401344 décrit une tête de coupe de débroussailleuse.

Ce dispositif de coupe utilise un fil mono brin traversant donc génère une perte de fil importante (tout le centre de la tête). Si le fil se rompt d'un côté de la tête, il faut obligatoirement tout le changer. Les barrettes de déverrouillage sont situées sur l'extérieur, donc sujettes à l'encrassement.

Le mécanisme de blocage, en position active, du mono brin de coupe dans la tête de coupe est constitué par un système de fourchette de pincement complexe qui ne permet pas un verrouillage automatique du fil de coupe, dans cette position.

Les dispositifs décrits dans les documents ci-dessus et, d'une manière générale, l'ensemble des têtes de coupe de l'état de la technique utilisant des brins de coupe flexibles, ont pour inconvénients :
- la difficulté, voire dans certains cas, l'impossibilité de procéder à des réglages de la longueur des brins de coupe en fonction du travail à effectuer ;
- la durée des interventions nécessaires pour retirer les brins de coupe usés et procéder à leur remplacement, du fait du port obligatoire de gants, ce qui complique les manipulations ;
- l'encrassement des dispositifs extérieurs de commande de déverrouillage des moyens de blocage des brins de coupe ;
- la nécessité de posséder un outil pour procéder à l'ouverture de la tête de coupe et au déverrouillage des brins de coupe usés ou endommagés.

Un objet de la présente invention est de remédier aux inconvénients susmentionnés ou, tout au moins, de diminuer très sensiblement le degré des contraintes qu'ils imposent.

Selon l'invention, cet objectif est atteint grâce à une tête de coupe comprenant un boîtier extérieur et utilisant deux brins de fil de coupe flexibles implantables à l'intérieur de ladite tête de coupe, de sorte à pouvoir s'étendre radialement à l'extérieur de cette dernière au travers d'orifices ménagés dans la paroi latérale du boîtier extérieur de celle-ci, laquelle comporte, d'une part, un moyen d'accouplement à l'arbre d'entraînement d'un moteur et, d'autre part, un ensemble porte-brins solidaire en rotation dudit boîtier extérieur et supportant un mécanisme de serrage des brins de coupe engagé à l'intérieur dudit boîtier extérieur, cette tête de coupe étant notamment remarquable en ce que le mécanisme de serrage comporte des cames de pinçage montées avec une aptitude de pivotement dans des plans parallèles entre eux et à l'axe de rotation de la tête de coupe, et en ce que cet ensemble porte-brins est monté avec une aptitude de translation axiale dans le boîtier extérieur de la tête de coupe, ce dernier et ledit mécanisme de serrage étant agencés complémentairement, de sorte que l'application simultanée d'un mouvement axial relatif de sens contraire audit boîtier extérieur et audit ensemble porte-brins, permet :
- soit de soulever les cames de pinçage de manière à autoriser le positionnement et le retrait des brins de coupe,
- soit de rabaisser lesdites cames afin de réaliser le blocage des brins de coupe dans la tête de coupe.

De manière avantageuse, l'application simultanée de mouvements axiaux convergents au boîtier et à l'ensemble porte-brins logé à l'intérieur de ce boîtier est utilisée pour permettre de soulever les cames de pinçage, de manière à autoriser l'introduction, le coulissement ou le positionnement des brins de coupe à l'intérieur de la tête de coupe, tandis que l'application simultanée de mouvements axiaux divergents audit boîtier et audit support de mécanisme de serrage permet de rabaisser lesdites cames afin de réaliser le blocage de la position active des brins de coupe dans la tête de coupe.

Selon l'invention, les mouvements axiaux relatifs convergents du boîtier et du mécanisme de pinçage sont obtenus par le déplacement axial manuel du boitier extérieur.

Selon une autre disposition caractéristique, les mouvements axiaux relatifs divergents du boîtier et de l'ensemble porte-brins entraînant le verrouillage des brins de coupe sont obtenus automatiquement par l'action d'un moyen élastique de rappel.

Selon un mode d'exécution intéressant, ce moyen élastique de rappel est constitué par un ressort agissant en compression et interposé entre une cloison intérieure prévue en partie haute du boîtier extérieur et le support du mécanisme de serrage, de sorte à permettre le blocage automatique des brins de coupe après leur positionnement dans la tête de coupe.

Selon un mode d'exécution avantageux, le support du mécanisme de serrage comprend deux couloirs de guidage et de positionnement des brins de coupe, disposés parallèlement, de part et d'autre de l'axe de rotation de la tête de coupe, une portion d'entrée de chacun de ces couloirs est découverte, et l'organe de pinçage pivotant de chaque dispositif de pinçage est monté en regard de cette portion découverte. De manière préférée, chacun de ces organes de pinçage est constitué par une came comportant une surface de pinçage et un épaulement latéral présentant un profil en forme de came.

Selon un mode de réalisation préféré, l'arbre d'entraînement et le passage axial ménagé dans le support du mécanisme de serrage présentent un profil complémentaire adapté, pour permettre l'entraînement en rotation de la tête de coupe.

La tête de coupe selon l'invention procure plusieurs avantages intéressants.

Elle est d'une très grande simplicité de fabrication et d'utilisation. L'implantation des brins de coupe, leur ajustement en fonction des travaux de fauchage ou de débroussaillage à effectuer, leur retrait et leur remplacement par suite d'usure ou de cassure, peuvent s'opérer très facilement et très rapidement, et ne requièrent aucun outillage aussi élémentaire soit-il.

La possibilité de décoincer manuellement les brins de coupe, permet de ressortir ceux-ci du même côté que celui ayant servi à leur introduction dans la tête de coupe. Cela évite nécessairement d'avoir à faire dépasser les brins, du côté opposé à l'orifice réservé à leur introduction, ce qui permet de raccourcir la longueur des chutes (brins usés ou cassés).

Il est ainsi possible d'utiliser des brins de coupe plus longs que ceux utilisés pour l'équipement des machines connues. L'opérateur peut, après usure partielle du fil, commodément débloquer ledit fil de sa position première et le faire ressortir en sens inverse de son sens d'introduction pour compenser ladite usure et pour optimiser les chutes de fil ne pouvant plus être utilisées (dans les machines connues, les chutes sont importantes, car une partie non négligeable de la longueur des brins de coupe ne peut pas être utilisée). Cela fait économiser du fil et du temps lié au remplacement moins fréquent des fils usés.

La paroi périphérique du boîtier extérieur est munie d'ouvertures pour l'introduction des brins de coupe et d'ouvertures d'extraction prévues face à ces dernières et, selon un mode d'exécution avantageux ces ouvertures présentent une forme allongée orientée parallèlement à l'axe de rotation dudit boîtier.

La forme allongée de ces ouvertures ou fentes latérales permet, lors des déplacements relatifs du boîtier extérieur par rapport au support du mécanisme de serrage, de ne pas bloquer lesdits mouvements par les brins de coupe lorsque ceux-ci sont engagés dans la tête de coupe.

Selon une autre disposition caractéristique, la tête de coupe comporte un arbre axial d'entraînement apte à être accouplé à une motorisation, cet arbre d'entraînement étant solidaire en rotation du support de mécanisme de serrage.

Selon un mode de réalisation intéressant, le boîtier extérieur et le support du mécanisme de serrage sont solidaires en rotation.

Selon un mode d'exécution préféré, l'entraînement en rotation du boîtier extérieur est réalisé par l'intermédiaire du support du mécanisme de serrage.

Selon un mode d'exécution préféré, l'accouplement en rotation du support du mécanisme de serrage et du boîtier extérieur est réalisé au moyen de plots d'entraînement solidaires de la cloison intérieure du boîtier extérieur et orientés parallèlement à l'axe de rotation de la tête de coupe, ces plots d'entraînement étant engagés, avec une aptitude de glissement dans des rainures ménagées dans le support du mécanisme de serrage, de préférence dans au moins deux côtés opposés de ce dernier.

Selon une autre disposition caractéristique, le mécanisme de serrage comprend deux dispositifs de pinçage des brins de coupe disposés de part et d'autre de l'arbre axial d'entraînement, et permettant, chacun, le positionnement et le verrouillage d'un brin de coupe.

Selon un mode d'exécution avantageux, le support du mécanisme de serrage est muni de deux couloirs de positionnement des brins de coupe, disposés parallèlement, de part et d'autre de l'arbre axial d'entraînement de la tête de coupe, et dont au moins une portion d'entrée est découverte, l'organe basculant (de préférence, cames) des dispositifs de pinçage étant monté en regard de cette portion découverte et soumis à l'action d'un ressort tendant à appliquer sa surface active en direction de ladite portion découverte, de sorte à presser le brin de coupe engagé dans le couloir de positionnement contre le fond de ce dernier de façon à assurer le blocage dudit brin de coupe, le boîtier extérieur étant muni, intérieurement, de doigts de poussée permettant de faire pivoter lesdites cames afin de supprimer la pression de celles-ci sur les brins de coupe, lors des mouvement axiaux convergents du boîtier extérieur et de l'ensemble porte-brins.

Les dispositions caractéristiques ci-dessus, et d'autres encore, ressortiront mieux de la description qui suit et des dessins annexés dans lesquels :

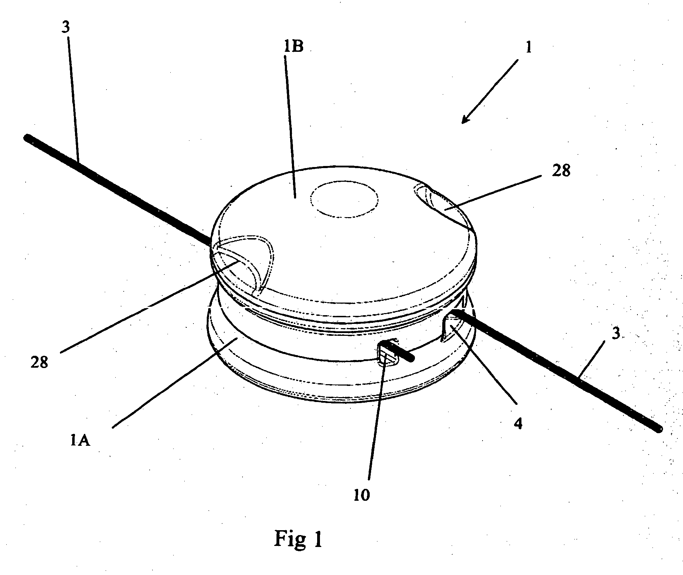

La figure 1 est une vue en perspective d'une tête de coupe utilisant des brins de fils de coupe flexibles, selon l'invention.

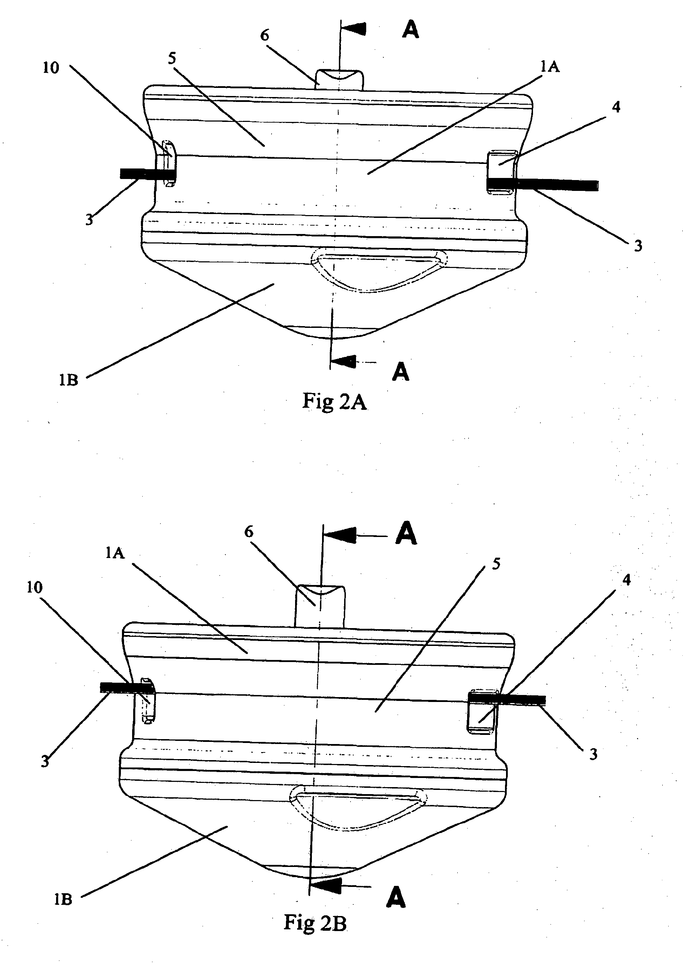

La figure 2A est une vue latérale de cette tête de coupe équipée de brins de coupe représentés en position verrouillée.
La figure 2B est une vue analogue à la figure 2A et suivant laquelle les brins de coupe sont montrés en position déverrouillée.
La figure 3A est une vue en coupe axiale selon la ligne A-A de la figure 2A.
La figure 3B est une vue en coupe axiale analogue selon la ligne A-A de la figure 2B.

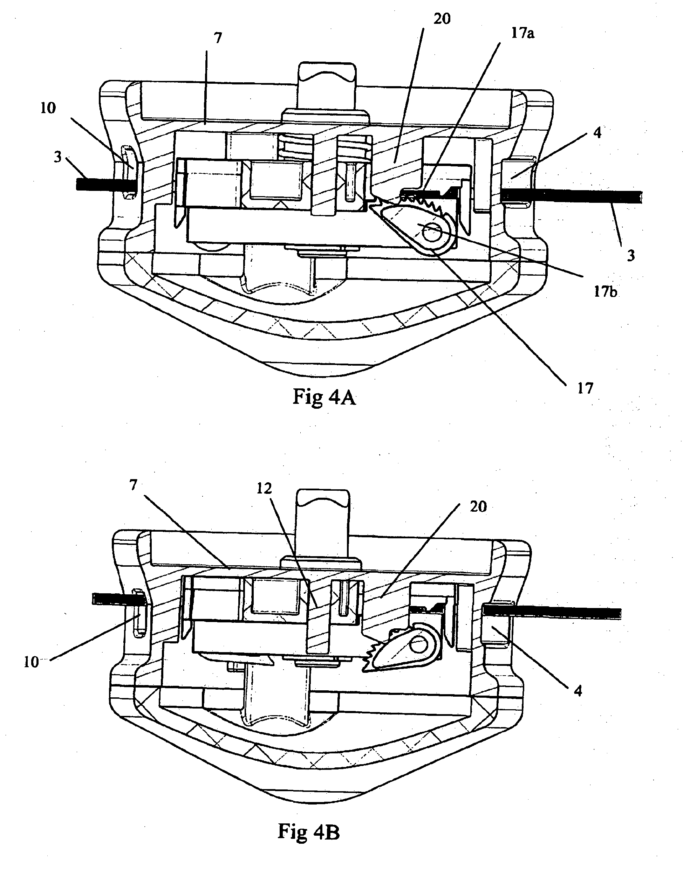

La figure 4A est une vue en coupe axiale selon la ligne B-B de la figure 3A.
La figure 4B est une vue en coupe selon la ligne B-B de la figure 3B.

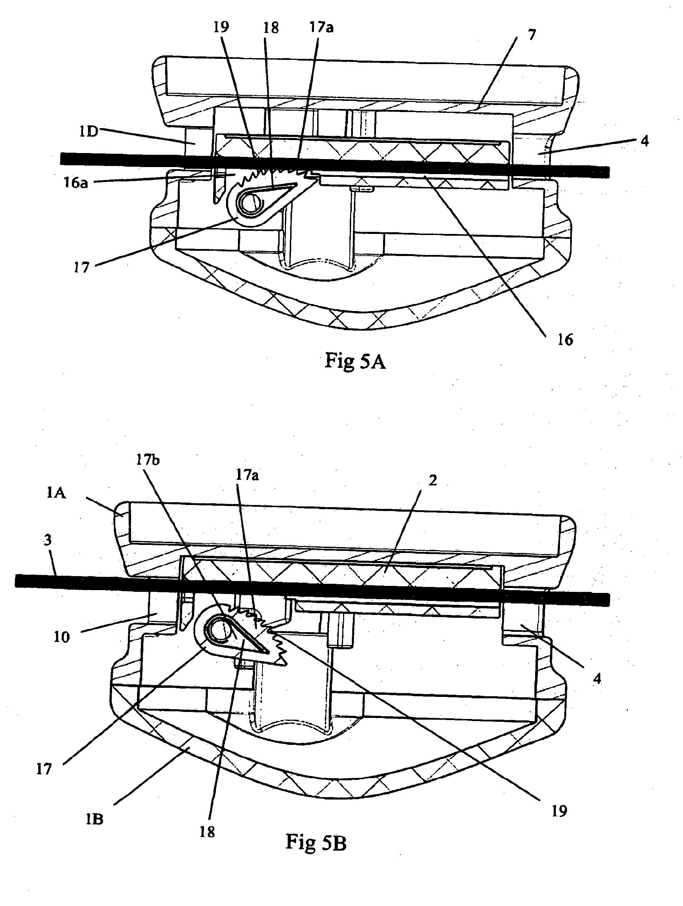

La figure 5A est une vue en coupe selon la ligne D-D de la figure 3A.
La figure 5B est une vue en coupe suivant la ligne D-D de la figure 3B.

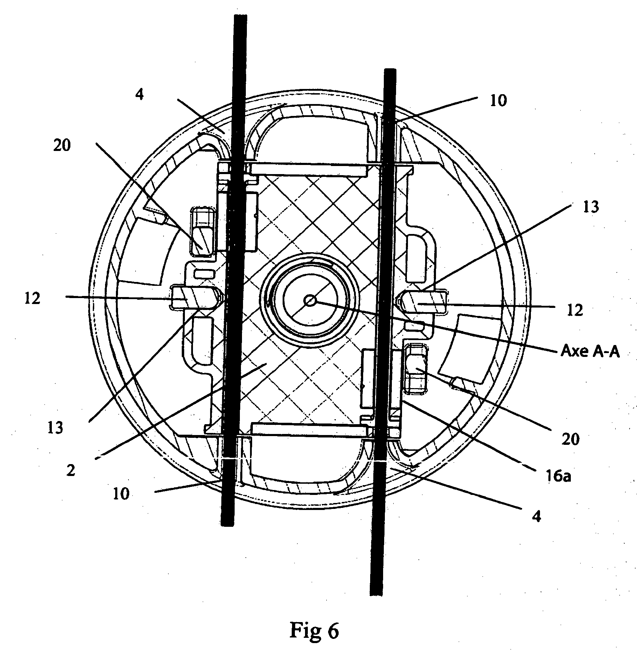

La figure 6 est une vue en coupe et en plan selon la ligne E-E de la figure 3A.
La figure 7 est une vue de détail et en coupe axiale de la tête de coupe selon la ligne A-A de la figure 2B dans une première disposition constructive.
La figure 8 est une vue de détail et en coupe selon la ligne H-H de la figure 7.
La figure 9A est une vue en coupe selon la ligne F-F de la figure 7 avec la partie inférieure 1B du boîtier inférieur non bloquée.
La figure 9B est une vue en coupe selon la ligne F-F de la figure 7 avec la partie inférieure 1 B du boîtier inférieur bloquée.
La figure 9C est une vue en coupe et en plan selon la ligne R-R de la figure 9A.
La figure 9D est une vue en coupe et en plan analogue selon la ligne R-R de la figure 9B.
La figure 10 est une vue de détail et en coupe axiale de la tête de coupe selon la ligne A-A de la figure 2B dans une deuxième disposition constructive.
La figure 11A est une vue en coupe selon la ligne F-F de la figure 10 avec la partie inférieure 1B du boîtier inférieur non bloquée.
La figure 11B est une vue en coupe selon la ligne F-F de la figure 10 avec la partie inférieure 1B du boîtier inférieur bloquée.
La figure 11C est une vue en coupe et en plan selon la ligne T-T de la figure 11A.
La figure 11D est une vue en coupe et en plan analogue selon la ligne T-T de la figure 11B.

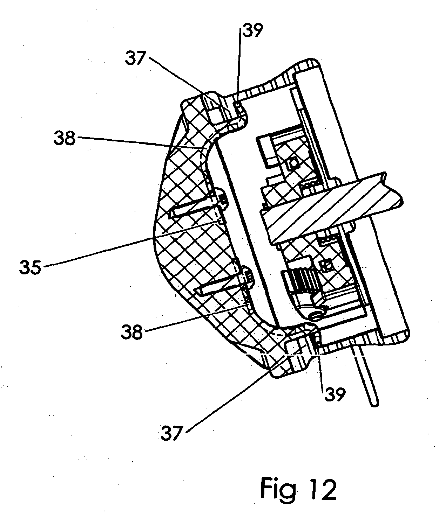

La figure 12 est une vue en coupe suivant la ligne U-U de la figure 11D.
La figure 13 est une vue en perspective d'un coupe herbe équipé d'une tête de coupe utilisant des brins de coupe flexibles, selon l'invention.

On se réfère auxdits dessins pour décrire des exemples intéressants, quoique nullement limitatifs, de réalisation de la tête de coupe selon l'invention.

Dans l'exposé qui suit et dans les revendications, des mots tels que « haute », « basse », « supérieure », « inférieure », « latérale » ,..., sont utilisés en référence à la position de la tête de coupe en cours de travail, afin de faciliter la description de l'invention. Ces mots n'ont donc aucun caractère restrictif.

Pour faciliter la lecture de la description et des revendications, on précise que :
- le terme « boîtier extérieur» désigne l'enveloppe creuse extérieure de la tête de coupe ;
- l'expression « support du mécanisme de serrage » désigne la pièce mobile qui supporte les éléments de pinçage ;
- l'expression « mécanisme de serrage » désigne les couples d'organes complémentaires de pinçage assurant le verrouillage des brins de coupe et leur relâchement ;
- le terme « came » désigne l'organe basculant de chaque dispositif de pinçage comportant un épaulement latéral présentant un profil actif en forme de came.

Dans une construction préférentielle, la tête de coupe selon l'invention comprend une enveloppe extérieure ou boîtier extérieur 1 constitué en au moins deux parties, soit une partie supérieure de forme générale cylindrique 1A et une partie inférieure de forme sensiblement hémisphérique 1 B ou approximativement conique à sommet arrondi, appelée « bol glisseur », assemblée de manière démontable à la base de la partie supérieure. A l'intérieur de ce boîtier extérieur est monté un support du mécanisme de serrage 2 supportant un mécanisme de serrage 16-17 dans lequel peuvent être implantés des brins de fil de coupe flexibles ou souples 3, au travers d'ouvertures d'entrée 4, ménagées dans la paroi latérale 5 du boîtier extérieur 1. Ces fils de coupe 3 peuvent être découpés à la longueur désirée ou prédécoupés en différentes longueurs ; ils peuvent être exécutés en Nylon ® avec différents diamètres (par exemple de l'ordre de 2 à 4 mm) et avec des sections variées (plus ou moins ronde, carrée, étoilée, torsadée...).

Le support du mécanisme de serrage 2 est solidaire en rotation du boîtier extérieur 1 et cet ensemble est assujetti à un moyen d'accouplement permettant de le relier à l'arbre d'entraînement d'un moteur thermique ou de préférence d'un moteur électrique, ou d'un renvoi d'angle. Ce moyen est préférentiellement constitué par un arbre axial 6 s'étendant extérieurement en direction du haut, au dessus d'un cloisonnement 7 prévu à la partie supérieure du boîtier extérieur.

Selon l'invention, le support du mécanisme de serrage 2 est monté avec une aptitude de translation axiale relative dans le boîtier extérieur 1 de la tête de coupe, ce dernier et ledit support étant agencés complémentairement, de sorte que l'application simultanée d'un mouvement axial relatif de sens contraire audit boîtier extérieur et audit support, permet d'obtenir :
- soit l'écartement des organes complémentaires 16 - 17 - 17a du mécanisme de serrage autorisant le positionnement et le retrait des brins de coupe 3,
- soit le rapprochement desdits organes 16 - 17 - 17a entraînant le blocage des brins de coupe 3 dans la tête de coupe 1.

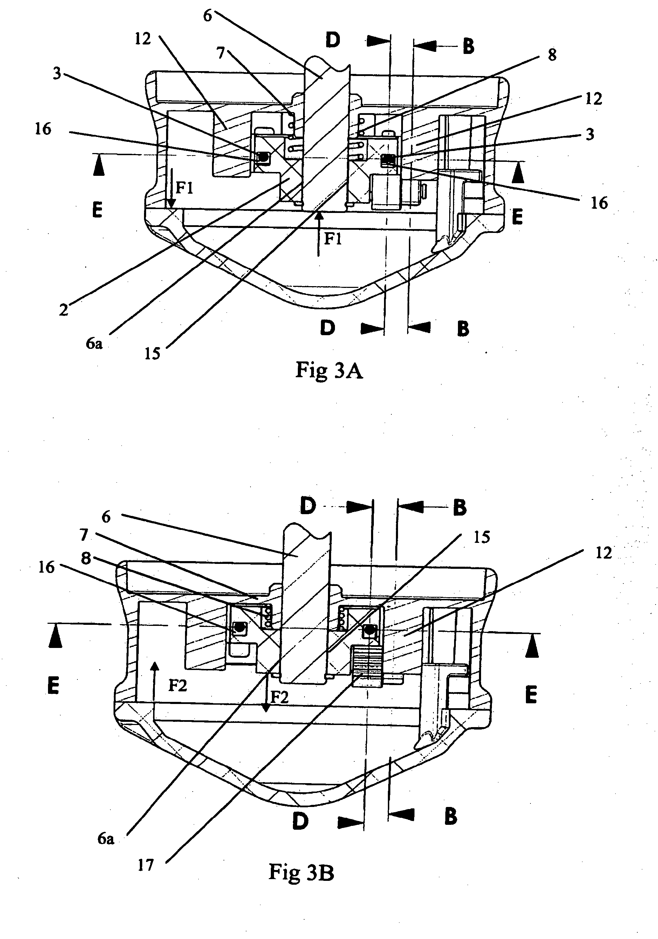

Selon un mode d'exécution préféré, l'application simultanée de mouvements axiaux convergents (flèches F1, figure 3A) au boîtier extérieur 1 et au support du mécanisme de serrage 2 logé à l'intérieur de ce boîtier extérieur, est utilisée pour permettre l'écartement des organes de serrage autorisant l'introduction des brins de coupe 3 et leur coulissement à l'intérieur de la tête de coupe, tandis que l'application simultanée de mouvements axiaux divergents (flèches F2, figure 3B) audit boîtier extérieur et audit support, permet le rapprochement des organes de serrage, et, par suite, le blocage en position active des brins de coupe engagés dans le boîtier extérieur.

Selon l'invention, les mouvements axiaux relatifs convergents (flèches F1) du boîtier extérieur 1 et du support du mécanisme de serrage 2 peuvent être obtenus par l'application d'une force manuelle modérée. Plus précisément l'application de cette force manuelle est obtenue par le déplacement axial manuel du boitier extérieur 1.

Les mouvements axiaux relatifs divergents du boîtier extérieur 1 et du support du mécanisme de serrage 2 entraînant le verrouillage des brins de coupe 3, sont obtenus automatiquement par l'action d'un moyen élastique de rappel.

Selon un mode d'exécution préféré, le moyen élastique de rappel est constitué par un ressort 8 agissant en compression et interposé entre le cloisonnement intérieur 7 du boîtier extérieur et le support du mécanisme de serrage 2, de sorte à permettre le rappel automatique dudit ensemble en position de blocage des brins de coupe, après leur positionnement dans la tête de coupe.

Comme indiqué précédemment, la paroi latérale cylindrique 5 du boîtier extérieur est munie d'ouvertures d'introduction 4 pour l'engagement et le positionnement des brins de coupe 3. Ladite paroi latérale 5 est également munie de deux ouvertures 10 pour l'extraction des brins de coupe usés ou cassés, ces ouvertures d'extraction étant disposées face aux ouvertures d'introduction 4, les ouvertures 4 et 10 étant alignées suivant des axes parallèles, symétriques et perpendiculaires à l'axe de rotation de la tête de coupe. Les ouvertures d'introduction 4 et les ouvertures d'extraction 10 présentent une forme allongée dont le grand axe est orienté parallèlement à l'axe de rotation A-A du boîtier extérieur. Les ouvertures d'introduction comportent une entrée convergente rayonnée, pour favoriser le guidage des brins de coupe lors de leur engagement dans la tête de coupe et éviter leur rupture lors de l'utilisation.

Ces ouvertures oblongues 4, 10 permettent lors des mouvements axiaux relatifs du boîtier extérieur 1 et du support du mécanisme de serrage 2 de ne pas coincer, blesser ou couper les brins de coupe 3 engagés dans lesdites ouvertures, et dans lesquelles ils peuvent glisser librement.

Le boîtier extérieur 1 et le support du mécanisme de serrage 2 sont solidaires en rotation, comme indiqué précédemment.

Le support du mécanisme de serrage 2 supporte les organes mobiles du mécanisme de serrage installés sur ce support.

Selon un mode d'exécution, l'accouplement en rotation du support du mécanisme de serrage 2 et du boîtier extérieur 1 est réalisé au moyen de plots d'entraînement 12 solidaires de la face interne de la cloison supérieure 7 ou flasque du boîtier extérieur 1 et orientés parallèlement à l'axe de rotation de la tête de coupe à l'intérieur de celle-ci, ces plots d'entraînement 12 étant engagés avec une aptitude de glissement dans des rainures 13 ménagées dans le support 2 du mécanisme de serrage 16 - 17 - 17a - 17b, de préférence dans au moins deux côtés opposés dudit support, et, plus précisément, dans les grands côtés de ce dernier.

Selon l'exemple de réalisation illustré, l'arbre d'entraînement 6 traverse un passage axial 15 ménagé dans le support du mécanisme de serrage 2; la portion traversante 6a de l'arbre 6 et ledit passage axial 15 présentent un profil complémentaire adapté pour permettre l'entraînement en rotation dudit support et, par conséquent, grâce aux plots 12 et aux rainures 13, du boîtier extérieur 1 de la tête de coupe, par exemple le passage axial présente une forme générale cylindrique et deux nervures longitudinales diamétralement opposées, tandis que la portion traversante 6A de l'arbre d'entrainement 6 présente un profil complémentaire et notamment deux gorges longitudinales diamétralement opposées dans lesquelles peuvent coulisser lesdites nervures.

Le support du mécanisme de serrage 2 comporte deux couloirs 16 de guidage et de positionnement des brins de coupe, disposés parallèlement, de part et d'autre de l'axe A-A de la tête de coupe et, par exemple, selon le mode de réalisation illustré, de part et d'autre de la portion traversante 6a de l'arbre axial d'entraînement 6 de la tête de coupe. Une portion d'entrée 16a de chacun de ces couloirs 16 est découverte. Une came de pinçage 17 comportant une surface de serrage 17a et un épaulement latéral 17b présentant un profil actif en forme de came est montée en regard de cette portion découverte, en face des ouvertures 4. Ces cames basculantes 17 du mécanisme de serrage sont montées avec une aptitude de pivotement dans des plans parallèles entre eux et parallèles à l'axe de rotation A-A de la tête de coupe, et elles sont soumises à l'action d'un ressort 18 ou autre moyen élastique de rappel, tendant à appliquer leur surface de serrage ou surface active en direction de ladite portion découverte, de sorte à presser le brin 3 de coupe engagé dans le couloir de positionnement 16 contre le fond de ce dernier, de façon à assurer le blocage dudit brin de coupe. Pour une meilleure efficacité du pincement ou du serrage exercé par les cames 17, la surface active de celles-ci peut être pourvue de dents 19. Ces dents sont orientées de sorte à permettre de retirer les brins de coupe par traction exercée sur leurs extrémités dépassant de l'ouverture d'extraction 10, et à interdire tout mouvement dans le sens contraire desdits brins de coupe. Toutefois, il serait aussi possible de retirer les brins usés ou endommagés par une traction exercée sur les brins de coupe dans une direction opposée à cette de leur introduction, après avoir débloqué, bien entendu, les dispositifs de pinçage en particulier pour donner la possibilité de réduire la longueur des chutes de fils de coupe en utilisant une portion de leur partie traversant précédemment la tête de coupe.

D'autre part, le boîtier extérieur est muni, intérieurement, de doigts de poussée 20 qui s'étendent fixement à partir de la face interne du cloisonnement supérieur 7 du boîtier extérieur 1, parallèlement à l'axe de rotation de ce dernier, et prennent appui sur le profil d'actionnement 17b des cames 17. Ces doigts permettent de faire pivoter lesdites cames, afin de supprimer la pression de celles-ci sur les brins de coupe, lorsque le boîtier extérieur 1 et le support du mécanisme de serrage 2 sont soumis à des forces de pression convergentes tendant à rapprocher le cloisonnement supérieur 7 du support du mécanisme de serrage 2.

Le bol glisseur sensiblement hémisphérique 1B ou approximativement conique à sommet arrondi constituant la partie inférieure du boîtier extérieur 1 peut être assemblé à la base de la partie supérieure 1A de celui-ci par tout moyen de fixation rapide convenable ne nécessitant pas d'outils. Ce bol glisseur permet l'appui de la tête de coupe sur le sol, de sorte à faciliter l'utilisation des appareils munis de cette tête, tout en maintenant les fils de coupe à une distance de quelques centimètres du sol.

De préférence, la partie basse de la paroi latérale 1A du boîtier extérieur 1 et la partie supérieure circulaire du bol glisseur 1B, sont munies de moyens de retenue complémentaires dont l'assemblage nécessite un mouvement axial relatif des deux pièces, suivi d'un mouvement de rotation d'amplitude limitée, dans le sens de rotation de l'outil pour éviter son déverrouillage pendant la phase travail, permettant de mettre en prise les organes complémentaires desdits moyens de retenue.

L'assemblage rigide des parties supérieure 1A et inférieure 1B du boîtier extérieur 1 peut être réalisé par des moyens autorisant le démontage de ces parties en cas de besoin.

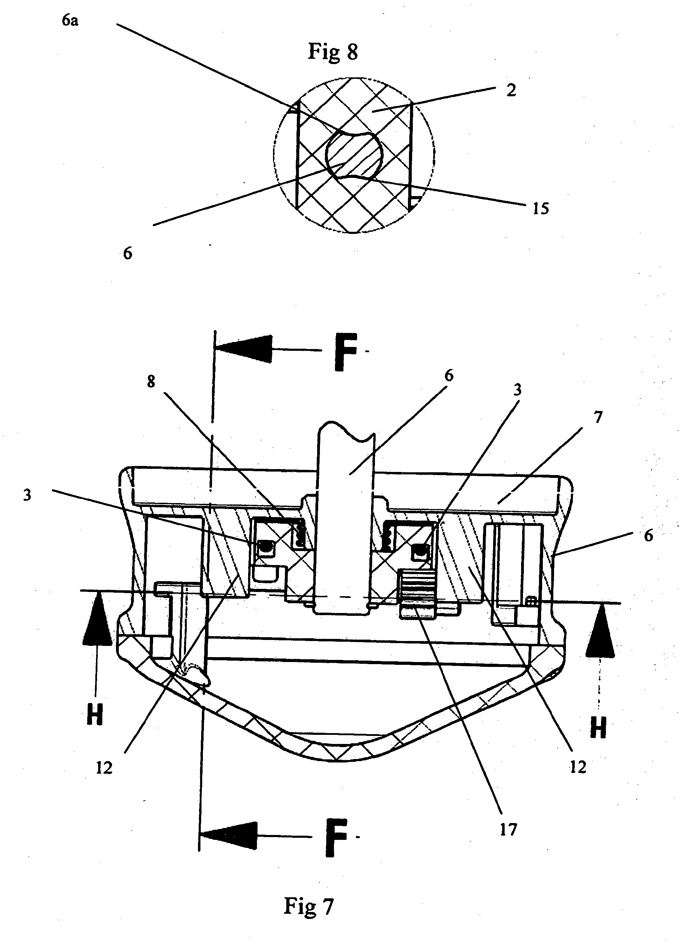

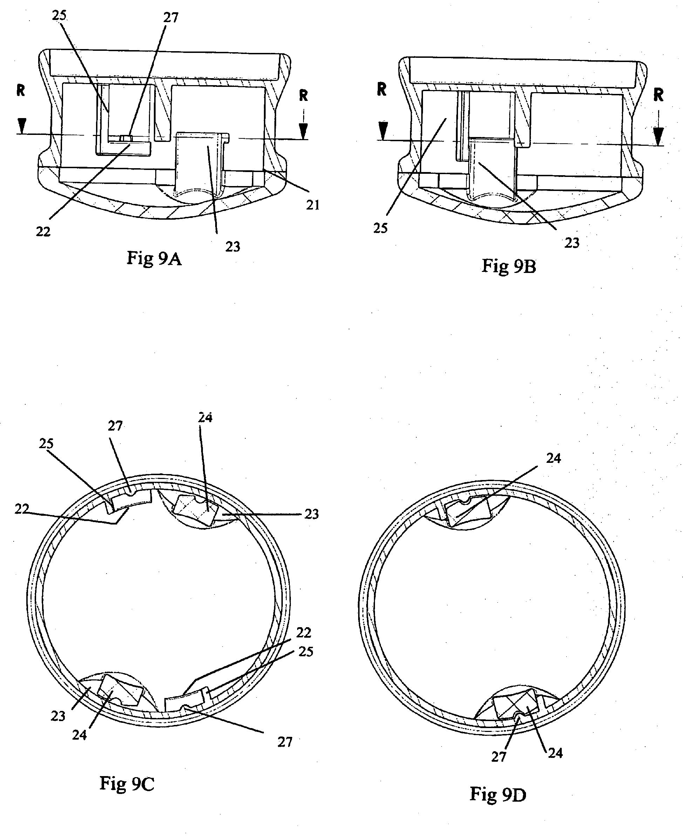

Dans une première solution constructive (Fig 7, 9A, 9B, 9C, 9D) par exemple, la partie inférieure peut être encastrée dans la partie supérieure et retenue dans celle-ci au moyen de pattes d'assemblage flexibles comportant un bec de retenue se crochetant sur le bord inférieur de la base de la partie inférieure.

La surface interne de la paroi latérale cylindrique du boitier extérieur 1A est par exemple munie, au voisinage et le long de son bord inférieur circulaire 21, d'au moins deux épaulements arrondis 22 qui, selon le mode d'exécution représenté, sont diamétralement opposés.

D'autre part, le bol glisseur 1 B est pourvu d'au moins deux pattes d'accrochage 23 diamétralement opposées s'étendant parallèlement à l'axe de celui-ci, et dont l'extrémité libre est munie d'un bec ou ergot de verrouillage 24 orienté en direction de cet axe.

Lors de la rotation du bol glisseur 1 B suivant son axe, les becs ou ergots de verrouillage 24 viennent en appui sur les épaulements arrondis 22 ce qui limite le mouvement de translation dudit bol glisseur 1 B par rapport à la partie supérieure 1A du boîtier extérieur 1

Une butée 25 disposée à l'une des extrémités de chaque épaulement 22 limite le mouvement rotatif des becs ou ergots de verrouillage 24 lors de la mise en place du bol glisseur 1 B dans la position d'assemblage.

D'autre part, le bord du bec 24 et l'épaulement arrondi 22 des becs sont munis de moyens complémentaires de verrouillage, en fin de mouvement de rotation, lors de l'assemblage des parties 1A et 1B du boîtier extérieur 1. Ces moyens peuvent être constitués par un téton 26 que présente la face supérieure des épaulements 22 et par une encoche 27 prévue dans le bord extérieur du bec 24 et dans laquelle s'engage automatiquement ledit téton de verrouillage en fin du mouvement rotatif d'assemblage.

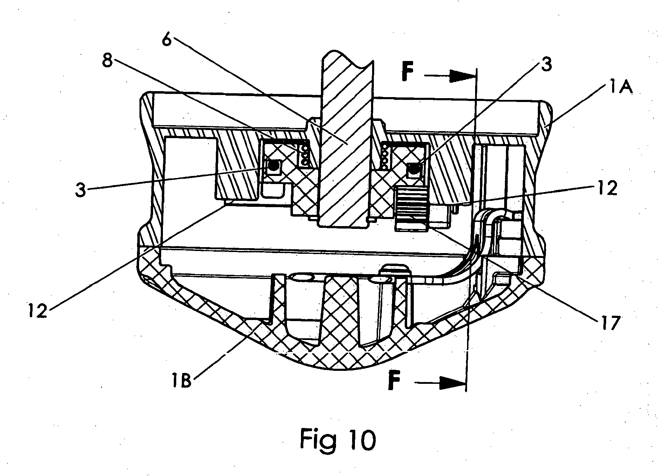

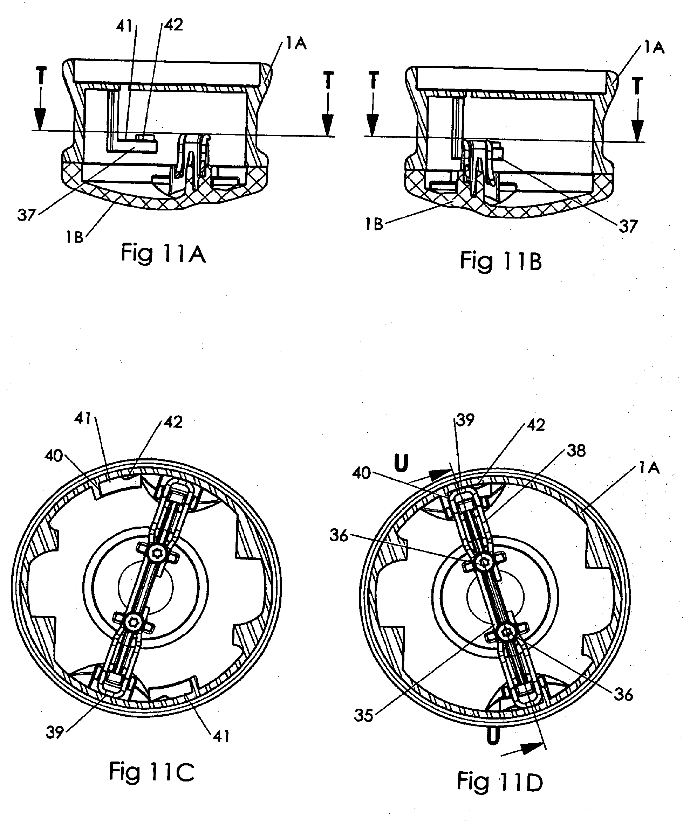

Dans une autre solution constructive (Fig 10, 11A, 11B, 11C, 11D), la surface interne de la paroi latérale cylindrique de la partie supérieure 1A du boîtier extérieur 1 est munie, au voisinage et le long de son bord inférieur circulaire 21, d'au moins deux épaulements arrondis 37 qui, selon le mode d'exécution représenté, sont diamétralement opposés.

D'autre part, le bol glisseur 1B est pourvu d'une pièce ressort en fil d'acier 35, fixée par au moins deux vis 36, formant au moins deux pattes d'accrochage 38 diamétralement opposées s'étendant perpendiculairement à l'axe de celui-ci, et dont les extrémités libres sensiblement en forme de U servent d'ergot de verrouillage 39.

Lors de la rotation du bol glisseur 1 B suivant son axe, les ergots de verrouillage 39 viennent en appui sur les épaulements 37 ce qui limite le mouvement de translation dudit bol glisseur par rapport à la partie supérieure 1A du boîtier extérieur 1.

Une butée 40 disposée à l'une des extrémités de chaque épaulement 37 limite le mouvement rotatif des ergots de verrouillage 39 lors de la mise en place du bol glisseur 1 B dans la position d'assemblage.

D'autre part, les ergots de verrouillage 39 et la face intérieure de la partie supérieure 1A du boîtier extérieur 1 sont munis de moyens complémentaires de verrouillage en fin de mouvement de rotation, lors de l'assemblage des parties 1A et 1 B du boîtier extérieur 1. Ces moyens peuvent être constitués par la forme en U des ergots de verrouillage 39 et par des tétons 42, diamétralement opposés, prévus à l'intérieur du boîtier extérieur de la partie supérieure 1A du boîtier extérieur 1, délimitant, avec la butée 40, deux logements 41 dans lesquels s'engagent automatiquement lesdits ergots de verrouillage 39 en fin du mouvement rotatif d'assemblage.

L'invention concerne également les appareils de coupe portables, tels que par exemple, coupe-herbe, coupe-bordure, débroussailleuse, taille-haie, ..., munis ou susceptibles d'être équipés d'une tête de coupe comportant les caractéristiques précédemment exposées.

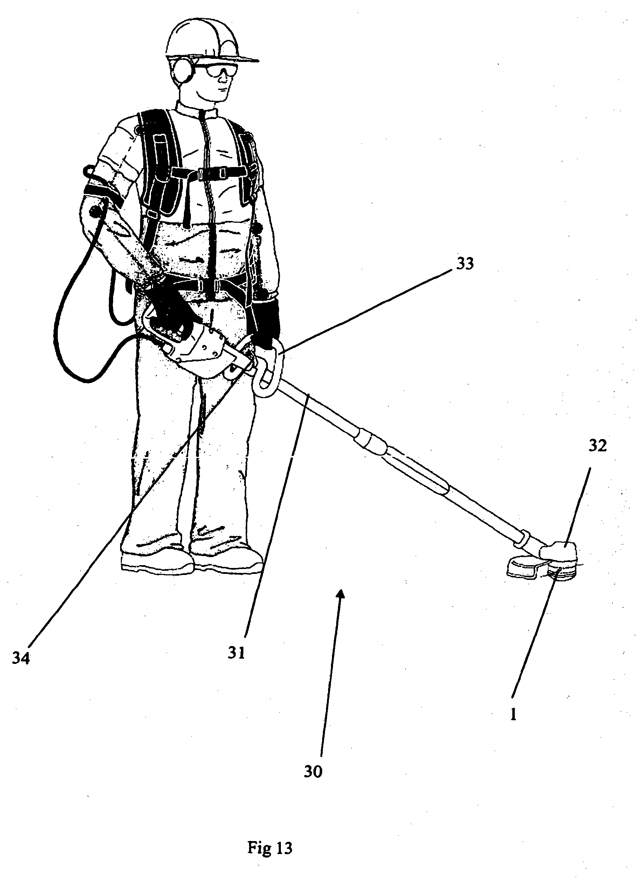

De tels appareils dont un exemple désigné dans son ensemble par la référence 30 à la figure 13, comportent généralement : un manche 31 dont l'extrémité distale supporte la tête de coupe 1, une motorisation 32 installée à la partie inférieure ou à la partie supérieure du manche pour l'entraînement en rotation de la tête de coupe, une poignée en U ou poignée double 33 de guidage et de commande de cette motorisation, un anneau 34 pour la fixation d'un harnais de portage. La motorisation d'entraînement de la tête de coupe peut être assurée par un moteur thermique ou par un moteur électrique alimenté par une batterie portable, ou par raccordement au secteur.

## Revendications

1. Tête de coupe rotative utilisant des brins de fil de coupe flexibles implantables à l'intérieur de ladite tête de coupe, de sorte à pouvoir s'étendre radialement à l'extérieur de cette dernière, au travers d'orifices ménagés dans la paroi latérale de celle-ci, laquelle comporte, d'une part, un moyen d'accouplement (6) à l'arbre d'entraînement d'un moteur et, d'autre part, un support (2) supportant un mécanisme de serrage (16, 17) des brins de coupe (3) engagés à l'intérieur du boîtier extérieur (1) de la tête de coupe et solidaire en rotation dudit boîtier extérieur, tête de coupe dans laquelle le mécanisme de serrage comporte des cames de pinçage (17) montées avec une aptitude de pivotement dans des plans parallèles entre eux et à l'axe de rotation (A-A) de la tête de coupe,
**caractérisée en ce que** le support du mécanisme de serrage (2) est monté avec une aptitude de translation axiale dans le boîtier extérieur (1) de la tête de coupe, ce dernier et le support du mécanisme de serrage (2) étant agencés complémentairement, de sorte que l'application simultanée d'un mouvement axial relatif de sens contraire (F1, F2) audit boîtier extérieur (1) et audit support du mécanisme de serrage (2) permet : - soit de soulever les cames de pinçage (17) de manière à autoriser le positionnement, le déroulement ou le retrait des brins de coupe, - soit de rabaisser lesdites cames (17) afin de réaliser le blocage des brins de coupe dans la tête de coupe.

2. Tête de coupe rotative selon la revendication 1, **caractérisée en ce que** le boîtier extérieur (1) et le support du mécanisme de serrage de l'ensemble porte-brins (2) sont agencés de sorte que l'application simultanée de mouvements axiaux convergents (F1) audit boîtier (1) et audit support du mécanisme de serrage de l'ensemble porte-brins (2) logé à l'intérieur du boîtier, est utilisée pour permettre de soulever les cames de pinçage (17) de manière à autoriser l'introduction, le coulissement, le positionnement ou le déroulement des brins de coupe à l'intérieur de la tête de coupe, tandis que l'application simultanée de mouvements axiaux divergents (F2) audit boîtier et audit support du mécanisme de serrage de l'ensemble porte-brins (2), permet de rabaisser lesdites cames (17) afin de réaliser le blocage des brins de coupe dans la tête de coupe.

3. Tête de coupe rotative selon la revendication 2, **caractérisée en ce que** les mouvements axiaux relatifs convergents (F1) du boîtier extérieur (1) et du support du mécanisme de serrage (2) sont obtenus par le déplacement axial manuel du boitier extérieur (1).

4. Tête de coupe rotative selon l'une des revendications 2 ou 3, **caractérisée en ce que** les mouvements axiaux relatifs divergents (F2) du boîtier extérieur et du support du mécanisme de serrage (2) sont obtenus automatiquement sous l'action d'un moyen élastique de rappel, de sorte à permettre le blocage automatique des brins de coupe après leur positionnement dans la tête de coupe.

5. Tête de coupe rotative selon la revendication 4, **caractérisée en ce que** le moyen élastique de rappel est constitué par un ressort (8) agissant en compression et interposé entre un cloisonnement intérieur du boîtier extérieur (1) et le support du mécanisme de serrage (2).

6. Tête de coupe rotative selon l'une quelconque des revendications 1 à 5, **caractérisée en ce que** le support du mécanisme de serrage (2) comprend deux couloirs (16) de guidage et de positionnement des brins de coupe (3), disposés parallèlement, de part et d'autre de l'axe de rotation (A-A) de la tête de coupe, en face des ouvertures d'entrée (4) du boitier extérieur (1), une portion d'entrée de chacun de ces couloirs (16) est découverte et une came pivotante (17) est montée en regard de cette portion découverte, cette came étant soumise à l'action d'un ressort (18) tendant à appliquer sa surface de pincement (17A) en direction de ladite portion découverte, de sorte à presser fortement le brin de coupe (3) engagé dans le couloir de positionnement contre le fond de ce dernier, en assurant ainsi le blocage dudit brin de coupe, le boîtier (1A-1B) est muni intérieurement de doigts de poussée (20) solidaires d'un cloisonnement supérieur (7) dudit boîtier et permettant de repousser et de faire pivoter la came (17), afin de supprimer la pression de celle-ci sur le brin de coupe, lorsque le boîtier extérieur (1) et le support du mécanisme de serrage sont soumis à des forces de pression convergentes tendant à rapprocher le cloisonnement supérieur (7) dudit boîtier extérieur et la face supérieure du support du mécanisme de serrage (2).

7. Tête de coupe rotative selon l'une quelconque des revendications 1 à 6, **caractérisée en ce que** le moyen d'accouplement comporte un arbre axial d'entraînement (6) apte à être accouplé à une motorisation, cet arbre étant solidaire en rotation du support du mécanisme de serrage (2).

8. Tête de coupe rotative suivant l'une quelconque des revendications 1 à 7, **caractérisée en ce que** l'arbre d'entraînement (6) traverse le support du mécanisme de serrage (2) et la portion traversante (6A) dudit arbre et le passage axial (15) ménagé dans le support dudit ensemble, présentent un profit complémentaire adapté pour permettre l'entraînement en rotation de la tête de coupe.

9. Tête de coupe rotative selon l'une quelconque des revendications 1 à 8, **caractérisée en ce que** la paroi latérale du boîtier (1) est munie d'ouvertures (4) pour l'introduction des brins de coupe (3) et d'ouvertures d'extraction (10) des brins usés ou endommagés prévues face à ces dernières, ces ouvertures présentant une forme allongée orientée parallèlement à l'axe (A-A) de rotation dudit boîtier extérieur.

10. Tête de coupe rotative selon l'une quelconque des revendications 1 à 9, **caractérisée en ce que** le support du mécanisme de serrage (2) et le boîtier extérieur (1A-1B) sont pourvus de moyens complémentaires d'accouplement en rotation réalisés au moyen de plots (12) d'entraînement solidaires de la cloison supérieure (7) du boîtier extérieur (1) et orientés parallèlement à l'axe de rotation de la tête de coupe, ces plots d'entraînement étant engagés, avec une aptitude de glissement, dans des rainures (13) ménagées dans ledit support du mécanisme de serrage (2), de préférence dans au moins deux côtés opposés de ce dernier.

11. Tête de coupe rotative selon l'une quelconque des revendications 1 à 10, **caractérisée en ce que** la partie basse de la paroi latérale (5) du boîtier (1) et la partie supérieure circulaire du bol glisseur (1B) sont munies de moyens de retenue complémentaires (22, 23, 24, 35-42) dont l'assemblage nécessite seulement un mouvement axial relatif des deux pièces, suivi d'un mouvement de rotation d'amplitude limitée permettant de mettre en prise les organes complémentaires desdits moyens de retenue.

12. Tête de coupe rotative selon la revendication 11, **caractérisée en ce que** les moyens d'assemblage de la partie supérieure (1A) du boîtier (1) et du bol glisseur (1 B) comprennent, d'une part, au voisinage et le long du bord inférieur circulaire (21) de la surface interne de la paroi latérale cylindrique de la partie supérieure (1A) du boîtier (1), au moins deux épaulements arrondis (22) diamétralement opposés, et, d'autre part, au moins deux pattes d'accrochage (23) diamétralement opposées s'étendant parallèlement à l'axe du bol glisseur (1B) et dont l'extrémité libre est munie d'un bec ou ergot de verrouillage (24) orienté en direction de cet axe.

13. Tête de coupe rotative selon la revendication 12, **caractérisée en ce qu'**elle comprend une butée (25) disposée à l'une des extrémités de chaque épaulement (22), limitant le mouvement rotatif des becs ou ergots de verrouillage (24) lors de la mise en place du bol glisseur (1 B) dans la position d'assemblage.

14. Tête de coupe rotative selon l'une des revendications 12 ou 13, **caractérisée en ce que** le bord du bec (24) et l'épaulement arrondi (22) des becs sont munis de moyens complémentaires de verrouillage en fin de mouvement de rotation lors de l'assemblage des parties (1A) et (1B) du boîtier (1).

15. Tête de coupe rotative selon la revendication 14, **caractérisée en ce que** les moyens complémentaires de verrouillage sont constitués par un téton (26) que présente la face supérieure des épaulements (22) et par une encoche (27) prévue dans le bord extérieur du bec (24), dans laquelle s'engage automatiquement ledit téton de verrouillage en fin du mouvement rotatif d'assemblage.

16. Tête de coupe rotative selon la revendication 11, **caractérisée en ce que** les moyens d'assemblage de la partie supérieure (1A) du boîtier (1) et du bol glisseur (1B) comprennent, d'une part au voisinage et le long du bord inférieur circulaire (21) de la surface interne de la paroi latérale cylindrique de la partie supérieure (1A) du boîtier (1), au moins deux épaulements arrondis (37) diamétralement opposés, et, d'autre part, **en ce que** le bol glisseur 1B est pourvu d'une pièce ressort (35) fixée par au moins deux vis, formant au moins deux pattes d'accrochage (38) diamétralement opposées s'étendant perpendiculairement à l'axe du bol glisseur (1 B) et dont les extrémités libres sensiblement en forme de U servent d'ergot de verrouillage (39).

17. Tête de coupe rotative selon la revendication 16, **caractérisée en ce qu'**elle comprend une butée (40) disposée à l'une des extrémités de chaque épaulement (37), limitant le mouvement rotatif des becs ou ergots de verrouillage (39) lors de la mise en place du bol glisseur (1 B) dans la position d'assemblage.

18. Tête de coupe rotative selon l'une des revendications 16 ou 17, **caractérisée en ce que** le bord des ergots de verrouillage (39) et l'épaulement arrondi (37) des becs sont munis de moyens complémentaires de verrouillage en fin de mouvement de rotation lors de l'assemblage des parties (1A) et (1B) du boîtier (1).

19. **Tête de coupe rotative selon la revendication 18, caractérisée en ce que** les moyens complémentaires de verrouillage des parties (1A) et (1B) sont constitués par la forme en U des ergots de verrouillage (39) et par des tétons (42) diamétralement opposés prévus à l'intérieur de la partie supérieure (1A) du boîtier extérieur (1) délimitant avec la butée (40) deux logements (41) dans lesquels s'engagent automatiquement lesdits ergots de verrouillage en fin du mouvement rotatif d'assemblage.

20. Appareil de coupe portable tel que coupe-herbe ou coupe-bordure ou débroussailleuse ou faux à moteur, taille-haie, **caractérisé en ce qu'**il est équipé d'une tête de coupe rotative utilisant des brins flexibles de' fil de coupe, selon l'une quelconque des revendications 1 à 19.

## Patentansprüche

1. Dreh-Schneidkopf mit flexiblen Schneidfäden, die im Innern des genannten Schneidkopfes eingesetzt werden können, damit sie durch in seine Seitenwand eingebrachte Öffnungen radial aus letzterem herausstehen können, wobei der Kopf einerseits eine Vorrichtung zur Ankupplung (6) an die Getriebewelle eines Motors aufweist und andererseits eine Halterung (2), die eine Klemmvorrichtung (16, 17) für die Schneidfäden (3) hält, die im Innern des Außengehäuses (1) des Schneidkopfes befestigt sind, und die mit dem genannten Außengehäuse drehfest verbunden ist, wobei im Schneidkopf die Klemmvorrichtung Klemmnocken (17) enthält, die so angebracht sind, dass sie parallel zueinander und zur Drehachse (A-A) des Schneidkopfes geschwenkt werden können, **dadurch gekennzeichnet, dass** die Halterung der Klemmvorrichtung (2) so angebracht ist, dass im Außengehäuse (1) des Schneidkopfes eine axiale Verschiebung möglich ist, wobei letzteres und die Halterung der Klemmvorrichtung (2) komplementär ausgestaltet sind, so dass es die gleichzeitige Aufbringung einer entgegengesetzten axialen Relativbewegung zwischen dem genannten Außengehäuse (1) und der genannten Halterung der Klemmvorrichtung (2) (F1, F2) ermöglicht: - entweder die Klemmnocken (17) so anzuheben, dass Ausrichtung, Abwickeln oder Einziehen der Schneidfäden möglich werden, - oder die genannten Nocken (17) abzusenken, um die Schneidfäden im Schneidkopf zu arretieren.

2. Dreh-Schneidkopf nach Anspruch 1, **dadurch gekennzeichnet, dass** das Außengehäuse (1) und die Halterung der Klemmvorrichtung aller Fadenhalter (2) so angebracht sind, dass die gleichzeitige Aufbringung konvergenter Axialbewegungen (F1) auf das genannte Gehäuse (1) und die genannte Halterung der Klemmvorrichtung aller Fadenhalter (2) im Innern des Gehäuses dazu dient, das Anheben der Klemmnocken (17) so zu ermöglichen, dass Einführen, Gleiten, Positionierung oder Abrollen der Schneidfäden im Innern des Schneidkopfes möglich sind, während es die gleichzeitige Aufbringung von divergenten Axialbewegungen (F2) auf das genannte Gehäuse und die genannte Halterung der Klemmvorrichtung aller Fadenhalter (2) ermöglicht, die genannten Nocken (17) abzusenken, um die Schneidfäden im Schneidkopf zu arretieren.

3. Dreh-Schneidkopf nach Anspruch 2, **dadurch gekennzeichnet, dass** konvergente axiale Relativbewegungen (F1) zwischen dem Außengehäuse (1) und der Halterung der Klemmvorrichtung (2) durch die manuelle axiale Verschiebung des Außengehäuses (1) erreicht werden.

4. Dreh-Schneidkopf nach einem der Ansprüche 2 oder 3, **dadurch gekennzeichnet, dass** divergente axiale Relativbewegungen (F2) zwischen dem Außengehäuse und der Halterung der Klemmvorrichtung (2) automatisch bei Einwirkung einer elastischen Rückstellvorrichtung eintreten, so dass die automatische Arretierung der Schneidfäden nach ihrer Positionierung im Schneidkopf möglich ist.

5. Dreh-Schneidkopf nach Anspruch 4, **dadurch gekennzeichnet, dass** die elastische Rückstellvorrichtung aus einer Druckfeder (8) besteht und zwischen einer inneren Unterteilung des Außengehäuses (1) und der Halterung der Klemmvorrichtung (2) sitzt.

6. Dreh-Schneidkopf nach einem der Ansprüche 1 bis 5, **dadurch gekennzeichnet, dass** die Halterung der Klemmvorrichtung (2) zwei Kanäle (16) zur Führung und Positionierung der Schneidfäden (3) enthält, die auf beiden Seiten der Drehachse (A-A) des Schneidkopfes parallel angeordnet sind, gegenüber den Eintrittsöffnungen (4) des Außengehäuses (1), wobei ein Teil der Eintrittsöffnung jedes dieser Kanäle (16) geöffnet ist und eine schwenkbare Nocke (17) gegenüber diesem geöffneten Teil angebracht ist, wobei diese Nocke von einer Feder (18) betätigt wird, die ihre Klemmfläche (17A) in Richtung des genannten offenen Teils wirksam werden lässt, so dass der in diesem Positionierungskanal eingelegte Schneidfaden (3) kräftig gegen den Boden des letzteren gedrückt und so die Arretierung des genannten Schneidfadens sichergestellt wird, wobei das Gehäuse (1A - 1B) im Innern mit Druckzapfen (20) versehen ist, die mit einer oberen Unterteilung (7) des genannten Gehäuses formschlüssig verbunden sind und es ermöglichen, die Nocke (17) zurückzuschieben und zu schwenken, um deren Druck auf den Schneidfaden aufzuheben, wenn auf das Außengehäuse (1) und die Halterung der Klemmvorrichtung konvergente Druckkräfte einwirken, die die obere Unterteilung (7) des genannten Außengehäuses und die obere Fläche der Halterung der Klemmvorrichtung (2) aufeinander drücken.

7. Dreh-Schneidkopf nach einem der Ansprüche 1 bis 6, **dadurch gekennzeichnet, dass** das Kupplungselement über eine axiale Getriebewelle (6) verfügt, die geeignet ist, an einen Antrieb angeschlossen zu werden, wobei diese Welle mit der Halterung der Klemmvorrichtung (2) drehfest verbunden ist.

8. Dreh-Schneidkopf nach einem der Ansprüche 1 bis 7, **dadurch gekennzeichnet, dass** die Getriebewelle (6) durch die Halterung der Klemmvorrichtung (2) durchgeht und der durchgehende Teil (6A) der genannten Welle und die in der Halterung der genannten Baugruppe angebrachte axiale Durchführung (15) über ein komplementäres Profil verfügen, das tauglich ist, den Drehantrieb des Schneidkopfes zu ermöglichen.

9. Dreh-Schneidkopf nach einem der Ansprüche 1 bis 8, **dadurch gekennzeichnet, dass** die Seitenwand des Gehäuses (1) mit Öffnungen (4) für die Einführung der Schneidfäden (3) und mit Öffnungen zum Herausziehen (10) benutzter oder beschädigter Fäden versehen ist, die ersteren gegenüberliegen, wobei diese Öffnungen von der Form her länglich und parallel zur Drehachse (A-A) des genannten Außengehäuses angeordnet sind.

10. Dreh-Schneidkopf nach einem der Ansprüche 1 bis 9, **dadurch gekennzeichnet, dass** die Halterung der Klemmvorrichtung (2) und das Außengehäuse (1A - 1B) mit komplementären Vorrichtungen für eine Drehkupplung versehen sind, die mit Stiften (12) zum formschlüssigen Antrieb der oberen Wand (7) des Außengehäuses (1) ausgeführt sind, die parallel zur Drehachse des Schneidkopfes ausgerichtet sind, wobei diese Antriebsstifte gleitend in Nuten (13) eingreifen, die in die genannte Halterung der Klemmvorrichtung (2) eingearbeitet sind, vorzugsweise auf mindestens zwei gegenüberliegenden Seiten letzterer.

11. Dreh-Schneidkopf nach einem der Ansprüche 1 bis 10, **dadurch gekennzeichnet, dass** der untere Teil der Seitenwand (5) des Gehäuses (1) und der obere runde Teil der Gleitschale (1B) mit formschlüssigen Haltevorrichtungen (22, 23, 24, 35 - 42) versehen sind, zu deren Verbindung nur eine axiale Relativbewegung zwischen den beiden Teilen, gefolgt von einer Drehbewegung mit kleinem Drehwinkel erforderlich ist, wodurch die formschlüssigen Einrichtungen der genannten Haltevorrichtungen ineinander eingreifen.

12. Dreh-Schneidkopf nach Anspruch 11, **dadurch gekennzeichnet, dass** die Verbindungsstücke des oberen Teils (1A) des Gehäuses (1) und der Gleitschale (1B) einerseits an und entlang der unteren kreisförmigen Kante (21) der Innenfläche der zylindrischen Seitenwand des oberen Teils (1A) des Gehäuses (1) mit mindestens zwei abgerundeten, einander diametral gegenüberliegenden Ansätzen (22) und andererseits mit mindestens zwei einander diametral gegenüberliegenden Verbindungslaschen (23) versehen sind, die parallel zur Achse der Gleitschale (1B) verlaufen und deren freies Ende mit einem Einrastschnabel oder -haken (24) versehen ist, der in Richtung dieser Achse zeigt.

13. Dreh-Schneidkopf nach Anspruch 12, **dadurch gekennzeichnet, dass** er an einem Ende jedes Ansatzes (22) mit einem Anschlag (25) versehen ist, der die Drehbewegung der Einrastschnäbel oder -haken (24) beim Einbau der Gleitschale (1B) in der Verbindungsposition begrenzt.

14. Dreh-Schneidkopf nach einem der Ansprüche 12 oder 13, **dadurch gekennzeichnet, dass** die Kante des Schnabels (24) und der abgerundete Ansatz (22) der Schnäbel mit komplementären Vorrichtungen zum Einrasten am Ende der Drehbewegung beim Zusammenbau der Teile (1A) und (1B) des Gehäuses (1) versehen sind.

15. Dreh-Schneidkopf nach Anspruch 14, **dadurch gekennzeichnet, dass** die komplementären Einrastvorrichtungen aus einem Nippel (26), der durch die obere Fläche der Ansätze (22) gebildet wird, und aus einer Aussparung (27) in der Außenkante des Schnabels (24) bestehen, in die der genannte Nippel am Ende der Drehbewegung zum Zusammenbau automatisch eingreift.

16. Dreh-Schneidkopf nach Anspruch 11, **dadurch gekennzeichnet, dass** die Verbindungsstücke des oberen Teils (1A) des Gehäuses (1) und der Gleitschale (1B) einerseits an und entlang der unteren kreisförmigen Kante (21) der Innenfläche der zylindrischen Seitenwand des oberen Teils (1A) des Gehäuses (1) mit mindestens zwei abgerundeten, einander diametral gegenüberliegenden Ansätzen (37) versehen sind, und andererseits dadurch, dass die Gleitschale 1B mit einem Federstück (35) versehen ist, das mit mindestens zwei Schrauben befestigt ist, das mindestens zwei, einander diametral gegenüberliegende Verbindungslaschen (38) bildet, die sich senkrecht zur Achse der Gleitschale (1B) erstrecken und deren freie Enden in deutlicher U-Form als Einrasthaken (39) dienen.

17. Dreh-Schneidkopf nach Anspruch 16, **dadurch gekennzeichnet, dass** er an einem der Enden jedes Ansatzes (37) mit einem Anschlag (40) versehen ist, der beim Einbau der Gleitschale (1B) in der Verbindungsposition die Drehbewegung der Einrastschnäbel oder -haken (39) begrenzt.

18. Dreh-Schneidkopf nach einem der Ansprüche 16 oder 17, **dadurch gekennzeichnet, dass** die Kante der Einrasthaken (39) und der abgerundete Ansatz (37) der Schnäbel am Ende der Drehbewegung bei der Verbindung der Teile (1A) und (1B) des Gehäuses (1) mit komplementären Einraststücken versehen sind.

19. Dreh-Schneidkopf nach Anspruch 18, **dadurch gekennzeichnet, dass** die komplementären Einrastvorrichtungen der Teile (1A) und (1B) aus der U-Form der Einrasthaken (39) und diametral gegenüberliegenden Nippeln (42) bestehen, die im Innern des oberen Teils (1A) des Außengehäuses (1), die mit dem Anschlag (40) zwei Aufnahmen (41) begrenzen, in die die genannten Einrasthaken automatisch am Ende der Drehbewegung beim Verbinden eingreifen.

20. Tragbare Schneidvorrichtung, z. B. Mähvorrichtung oder Rasentrimmer oder Freischneider oder Motorsense, Heckenschneider, **dadurch gekennzeichnet, dass** sie mit einem Dreh-Schneidkopf ausgestattet ist, der mit flexiblen Schneidfäden arbeitet, nach einem der Ansprüche 1 bis 19.

## Claims

1. A rotary cutting head using flexible cutting wire strands which can be installed in the interior of said cutting head so that they can extend radially to the exterior of the latter through orifices in the side wall thereof, which comprises on the one hand a coupling means (6) for coupling to the drive shaft of a motor and on the other hand a support (2) supporting a clamping mechanism (16, 17) for the cutting strands (3) which are engaged in the interior of the external housing (1) of the cutting head and fixed in respect of rotation to said external housing, in which cutting head the clamping mechanism comprises clamping cams (17) mounted with a capability of pivotal movement in planes parallel to each other and to the axis of rotation (A-A) of the cutting head, **characterised in that** the support of the clamping mechanism (2) is mounted with a capability of axial translatory movement in the external housing (1) of the cutting head, the latter and the support of the clamping mechanism (2) being arranged in complementary relationship so that the simultaneous application of a relative axial movement in the opposite direction (F1, F2) to said external housing (1) and to said support for the clamping mechanism (2) makes it possible: - either to raise the clamping cams (17) so as to allow positioning, unwinding or retraction of the cutting strands, - or to lower said cams (17) in order to implement blocking of the cutting strands in the cutting head.

2. A rotary cutting head according to claim 1 **characterised in that** the external housing (1) and the support for the clamping mechanism of the strand-carrying assembly (2) are arranged so that the simultaneous application of convergent axial movements (F1) to said housing (1) and to said support for the clamping mechanism of the strand-carrying assembly (2) which is accommodated in the interior of the housing is used to permit raising of the clamping cams (17) so as to permit introduction, sliding movement, positioning or unwinding of the cutting strands in the interior of the cutting head while the simultaneous application of divergent axial movements (F2) to said housing and to said support for the clamping mechanism of the strand-carrying assembly (2) makes it possible to lower said cams (17) in order to implement blocking of the cutting strands in the cutting head.

3. A rotary cutting head according to claim 2 **characterised in that** the relative convergent axial movements (F1) of the external housing (1) and the support for the clamping mechanism (2) are produced by manual axial displacement of the external housing (1).

4. A rotary cutting head according to one of claims 2 and 3 **characterised in that** the relative divergent axial movements (F2) of the external housing and of the support for the clamping mechanism (2) are achieved automatically under the action of an elastic return means so as to permit automatic blocking of the cutting strands after their positioning in the cutting head.

5. A rotary cutting head according to claim 4 **characterised in that** the elastic return means is formed by a spring (8) acting in compression and interposed between an internal partitioning of the external housing (1) and the support for the clamping mechanism (2).

6. A rotary cutting head according to any one of claims 1 to 5 **characterised in that** the support for the clamping mechanism (2) comprises two passages (16) for guiding and positioning of the cutting strands (3), which are disposed in parallel relationship on respective sides of the axis of rotation (A-A) of the cutting head facing the entry openings (4) of the external housing (1), an entry portion of each of said passages (16) is open and a pivotal cam (17) is mounted in facing relationship with said open portion, said cam being subjected to the action of a spring (18) tending to apply its clamping surface (17A) in the direction of said open portion so as to firmly press the cutting strand engaged in the positioning passage against the bottom of the latter, thereby ensuring blocking of said cutting strand, the housing (1A-1B) is internally provided with thrust fingers (20) fixed with respect to an upper partitioning (7) of said housing and permitting the cam (17) to be pushed back and pivoted so as to remove the pressure thereof on the cutting strand when the external housing (1) and the clamping mechanism support are subjected to convergent pressure forces tending to move the upper partitioning (7) of the external housing and the upper face of the clamping mechanism support (2) towards each other.

7. A rotary cutting head according to any one of claims 1 to 6 **characterised in that** the coupling means comprises an axial drive shaft (6) adapted to be coupled to a motor means, said shaft being fixed in rotation with respect to the support for the clamping mechanism (2).

8. A rotary cutting head according to any one of claims 1 to 7 **characterised in that** the drive shaft (6) passes through the support for the clamping mechanism (2) and the passing portion (6A) of said shaft and the axial passage (15) provided in the support for said assembly have a complementary profile adapted to permit the cutting head to be driven in rotation.

9. A rotary cutting head according to any one of claims 1 to 8 **characterised in that** the side wall of the housing (1) is provided with apertures (4) for the introduction of the cutting strands (3) and extraction openings (10) for used or damaged strands provided facing the latter, said openings being of an elongate shape oriented parallel to the axis (A-A) of rotation of said external housing.

10. A rotary cutting head according to any one of claims 1 to 9 **characterised in that** the support for the clamping mechanism (2) and the external housing (1A-1B) are provided with complementary rotational coupling means embodied by means of drive studs (12) fixed with respect to the upper partition (7) of the external housing (1) and oriented parallel to the axis of rotation of the cutting head, said drive studs being engaged with a capability of sliding movement in grooves (13) in said support for the clamping mechanism (2), preferably in at least two opposite sides of the latter.

11. A rotary cutting head according to any one of claims 1 to 10 **characterised in that** the low part of the side wall (15) of the housing (1) and the upper circular part of the sliding bowl (1B) are provided with complementary retaining means (22, 23, 24, 35-42), the assembly of which requires only a relative axial movement of the two parts followed by a rotary movement of limited amplitude permitting engagement of the complementary members of said retaining means.

12. A rotary cutting head according to claim 11 **characterised in that** the means for assembly of the upper part (1A) of the housing (1) and the sliding bowl (1B) comprise on the one hand in the vicinity of and along the lower circular edge (21) of the internal surface of the cylindrical side wall of the upper part (1A) of the housing (1), at least two diametrally opposite rounded shoulders (22) and on the other hand at least two diametrally opposite latching tabs (23) extending parallel to the axis of the sliding bowl (1B) and the free end of which is provided with a locking lug or projection (24) oriented in the direction of said axis.

13. A rotary cutting head according to claim 12 **characterised in that** it comprises an abutment (25) disposed at one of the ends of each shoulder (22) for limiting the rotary movement of the locking lugs or projections (24) when the sliding bowl (1B) is set in place in the assembly position.

14. A rotary cutting head according to either one of claims 12 and 13 **characterised in that** the edge of the projection (24) and the rounded shoulder (22) of the projections are provided with complementary locking means at the end of the rotary movement upon assembly of the parts (1A) and (1B) of the housing (1).

15. A rotary cutting head according to claim 14 **characterised in that** the complementary locking means are formed by a pin (26) on the upper face of the shoulders (22) and by a notch (27) in the external edge of the projection (24), into which said locking pin automatically engages at the end of the rotary assembly movement.

16. A rotary cutting head according to claim 11 **characterised in that** the means for assembly of the upper part (1A) of the housing (1) and the sliding bowl (1B) comprise on the one hand in the vicinity of and along the lower circular edge (21) of the internal surface of the cylindrical side wall of the upper part (1A) of the housing (1), at least two diametrally opposite rounded shoulders (22) and on the other hand that the sliding bowl (1B) is provided with a spring portion (35) fixed by at least two screws, forming at least two diametrally opposite latching tabs (38) extending parallel to the axis of the sliding bowl (1B) and whose free ends substantially of a U-shaped configuration serve as a locking lug (39).

17. A rotary cutting head according to claim 16 **characterised in that** it comprises an abutment (40) disposed at one of the ends of each shoulder (37) for limiting the rotary movement of the locking lugs or projections (39) when the sliding bowl (1B) is set in place in the assembly position.

18. A rotary cutting head according to either one of claims 16 and 17 **characterised in that** the edge of the locking lugs (39) and the rounded shoulder (37) of the projections are provided with complementary locking means at the end of the rotary movement upon assembly of the parts (1A) and (1B) of the housing (1).

19. A rotary cutting head according to claim 18 **characterised in that** the complementary locking means of the parts (1A) and (1B) are formed by the U-shaped configuration of the locking lugs (39) and by diametrally opposite pins (49) provided in the interior of the upper part (1A) of the external housing (1) delimiting with the abutment (40) two accommodation means (41) into which said locking lugs automatically engage at the end of the rotary assembly movement.

20. A portable cutting device such as a grass cutter or edge cutter or shrub cutter or motorised scythe or hedge trimmer **characterised in that** it is equipped with a rotary cutting head using flexible cutting wire strands according to any one of claims 1 to 19.
